# EUROPEAN PATENT APPLICATION

(11) **EP 0 719 043 A2**
(43) Date of publication of application: **26.06.1996**
(21) Application number: 95119809.2
(22) Date of filing: 15.12.1995
(51) Int. Cl.: H04N 7/088

(54) **Interactive television system**

(30) Priority: 23.12.1994 IT MI942621
(71) Applicant: ITALTEL SOCIETA ITALIANA TELECOMUNICAZIONI s.p.a., I-20149 Milano (IT)
(72) Inventor: Mugnano, Maria Angela, I-20123 Milano (IT)
(74) Representative: Giustini, Delio

(57) **Abstract**

Interactive television system with interavtivity data transmission together with the TV signal, exploiting the unused lines of a TV signal, and a decoder connected with each subscriber set to process said interactivity data and visualize in overlap on the screen signals or windows obtained from these data.

The interactive data (10) is set up by elementary data units or messages (M) structured in a hierarchical way, each one set up by a first header portion (H) and by a second control portion (C) containing data (CN) on the number of controls present in the message and at least one control (CM) of Interactive Activity.

## Description

### Field of the Invention

The present invention relates to an interactive television system which enables the domestic/residential user to participate actively in TV programmes such as quiz, commercials, opinion polls, sports events, telemarketing, etc.

In the International application No. PCT/EP94/04268 in the name of the same applicant, a system of the above-mentioned type is disclosed, which comprises a television station suitable to broadcast a TV signal and interactivity data during the vertical blanking interval (VBI) of the TV signal. In such system each user is provided with a TV receiver, a decoder linked to it and a device for direct and automatic access to the telephone line, connected in radio frequency to the decoder.

The decoder is able to interpret the interactive data transmitted together with the video signal, and to visualize them in overlap on the TV set, and the user makes his choices by means of a remote control with four shifting keys and one for the confirmation of the choice.

### Background Art

Other interactive television systems have been proposed which, in particular concerning the interactive data associated to the transmitted TV signal represent a certain number of drawbacks.

The known systems in fact provide for certain types of interactive activities prefixed and considered to be of interest, for example the so-called couponing, tele-polls, quiz, etc. The decoders are therefore suitable to interpret the corresponding and preset controls, however, once the decoders are installed, the introduction of new interactive activities is generally impossible, except particular cases which are in a certain way referable to foreseen control messages. This represents a heavy restriction for this type of systems as the decoders sold in big numbers risk to become obsolete within a short time, or to represent an obstacle for the expansion of the system.

A further inconvenience of the known systems consists in the substantially inflexible occupation of the available resources, i.e. of TTX system pages or of equivalent on which the interactive data is transmitted.

In some TV stations with nation-wide coverage the occupation of a relatively high number of pages (or parts of pages) may constitute considerable costs, and which may be destined to grow with a progressive increase of the page value following the diffusion of the TTX service, it is therefore important to find a solution which conforms itself to the number of pages available from time to time. At the contrary, for local TV stations, there are no significant restrictions concerning the availability of the support, but on the other side, the cost of a complex and unsufficiently used system will condition in a heavier way the diffusion of the system. In order to avoid the high acquisition cost of a complex and expensive system for the local TV stations, the system is provided with a TTX format data inserter.

There are moreover some specific aspects of the service which at long term may have negative repercussions.

For example the relation between the quantity of the TV station broadcast data (via radio, cable or whatsoever circular type) and the quantity of data sent back by the users towards the TV station through the telephone is important. The costs of the second type of data possibly to be shared by operator and user may excessively increase, if the system is structured thus to transmit too simple messages to the user. On the other hand, if it is true that the transmission cost from TV station to the user is insignificant, a major complexity of transmitted interactivity data involves high investment costs.

Finally minor aspects have to be considered which anyhow influence the quality of the service, and generally they are not appropriately taken into account in the present systems. For example it is necessary to provide for a correct closing down management of the interactive activity after the choices or operations by the user.

### Objects of the Invention

The object of the present invention is to realize an interactive television system which overcomes the above-mentioned drawbacks and restrictions of the known method, and in particular, it has to be flexible and elastic for what concerns the introduction of other interactive events.

### Disclosure of the Invention

The invention achieves these objects by means of an interactive television system which provides for the transmission of interactivity data transmitted together with the TV signal, exploiting the unused lines of the TV signal, and a decoder which is connected to each user TV set to process such interactivity data and to apply to the user TV set signals or visualizations obtained from these ones.

The system is characterized in that said interactivity data are set up by elementary data units or messages, each one composed by a first header portion and by a second control portion, said control portion including data concerning the number of controls present in the message and at least one interactive option control.

### Brief Description of the Drawings

The features of the present invention which are believed to be novel are set forth with particularity in the appended claims. The invention, together with further objects and advantages thereof, may be understood with reference to the following description, taken in conjunction with the accompanying drawings and in which:
Fig. 1 illustrates in a schematic way the general topology of the interactive television system according to the invention;
Fig. 2 illustrates in a more detailed way the general structure of the messages broadcast by the TV station;
Fig. 3 illustrates the TV Mask Descriptor used afterwards in different controls;
Fig. 4 illustrates the structure of the Interactive Option control;
Fig. 5 illustrates the structure of the User Response Management control;
Fig. 6 illustrates the structure of the Score Synthesis control;
Fig. 7 illustrates the structure of the Prize and Lot Drawing Management control;
Fig. 8 illustrates the structure of the Clock Definition control;
Fig. 9 illustrates the structure of the Frame Definition control;
Fig. 10 illustrates the structure of the Table Definition control;
Fig. 11 illustrates the structure of the Special Character Definition control;
Fig. 12 illustrates the structure of the Graphic Disabling Option control;
Fig. 13 illustrates the structure of the TV Icon Visualization control;
Fig. 14 illustrates the structure of the Score Table Visualization control.

### Detailed Description of a Preferred Embodiment

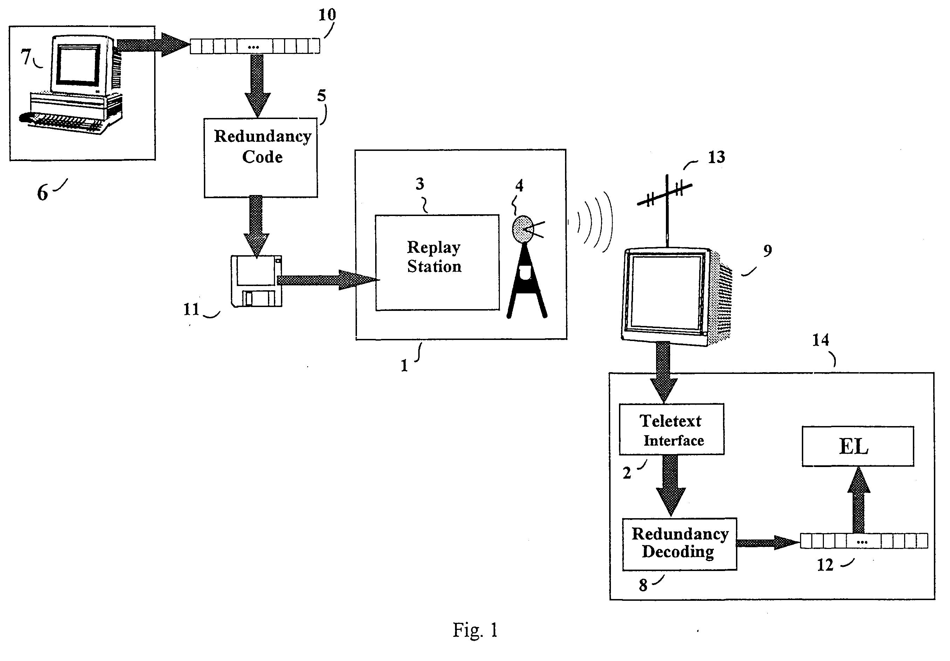

Fig. 1 shows in a schematic way the structure of an interactive TV system according to the invention.

In Fig. 1 reference 1 indicates a TV station including a Replay Station 3 and an antenna 4. This last one broadcasts normal TV programmes to which interactivity data have been added, received together with the signal broadcast by an antenna 13 and transferred to a TV set 9. Reference 14 indicates a user decoder which receives through an appropriate Teletex Interface card 2 the informations or data for the interactivity preferably transmitted by a Teletex system. Preferably the TV station 1 is a so-called replay station, i.e. suitable to broadcast previously recorded programmes.

In an already known way the TV station 1 is able to insert the interactivity data into the TV signal and, although the transmitter 1 illustrated by Fig. 1 transmits these composed via radio, in a more general way the TV station 1 broadcasts the signals in a circular way, and thus for example via cable or satellite.

A TV programme distributor or producer 6 is linked to the TV station 1 to generate, according to predetermined modalities and through a processor 7 or a similar one, interactivity signals or data 10 which are then sent to the TV station 1 via cable. A Redundancy Code 5 error protection mechanism of the known type is preferably foreseen, for example a codifier according to a redundant code such as a Hamming code.

The codified signal 10 can be generated in real time during a live transmission or it is preferably recorded in a storage device 11. This recording may happen during the recording of the transmission or afterwards, but before its broadcasting.

The decoder device 14 which receives the TV signals retrieves, by means of a Teletex Interface 2 unit from the received interframe signal (for instance Teletex pages), the interactivity signal with Hamming code, and then converts it, through a Redundancy Decoding unit 8 into an interactivity signal 12 identical with the signal 10 generated by the processor 7. In other words the signal construction modes are transparent concerning the error protection mechanism as well as concerning the transmission support on which the signal is travelling.

Hereafter the invention will be illustrated with specific reference to the use with a Teletex system (Televideo for RAI in Italy), however its use is not restricted to this transmission mode, but it may be applied in a more general way to all continuous and unidirectional transmission systems exploiting the unused lines of a television signal, as for instance the French system, etc.

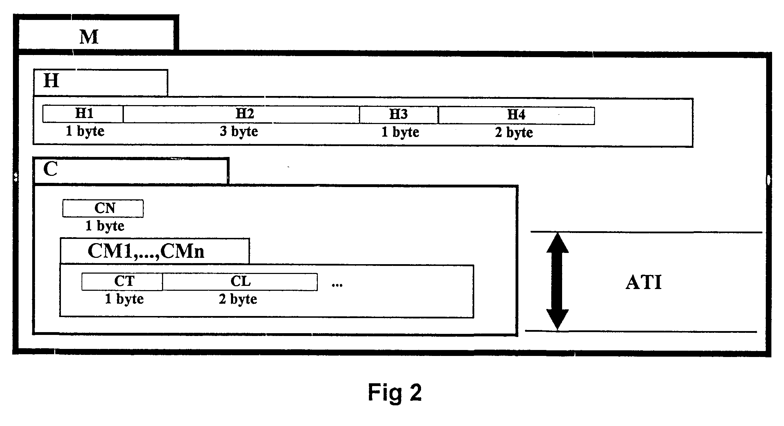

Now with reference to Fig. 2 to 14 the structure of signal 10 will be illustrated, which is structured or based on the elementary data unit defined as "messages" or multiple controls.

Fig. 2 illustrates the structure of a generic message (or multiple control) M which is generally speaking shaped in such a way to be completely contained in one TTX "page" set up by approximately 400 "net" bytes, or if longer, it may be distributed on more pages.

Coming back to Fig. 2, each message M comprises a header portion H and a control portion C. The portion H has at its turn a format with four fields, from H1 to H4, respectively.

The first field H1 is set up by 1 byte (8 bits) and identifies the TV channel on which the system is operating. The second field H2 is set up by 3 bytes and identifies the current interactive activity, i.e. a reference number which identifies a given television programme within said channel. The third field H3 consists of 1 byte and identifies the sequence number of the message which makes it possible to determine if the message is in sequence with respect to those received up to that moment, and the fourth H4 consists of 2 bytes, and it identifies the time out of the following message.

Referring to the time out field of the following message H4, this indicates the time within which the following message must arrive, and it allows to prevent from situations where the user remains "suspended" during an interactive activity, due to the missing reception of the following message, imposing in this case the cancellation of the interactive activity.

The second message or control portion C comprises a first section CN with a 1 byte extension, which indicates the number of controls contained in the remaining (following) bytes of the control portion.

Then follows a section of ATI Controls set up by one or more controls which depend on the function they carry out.

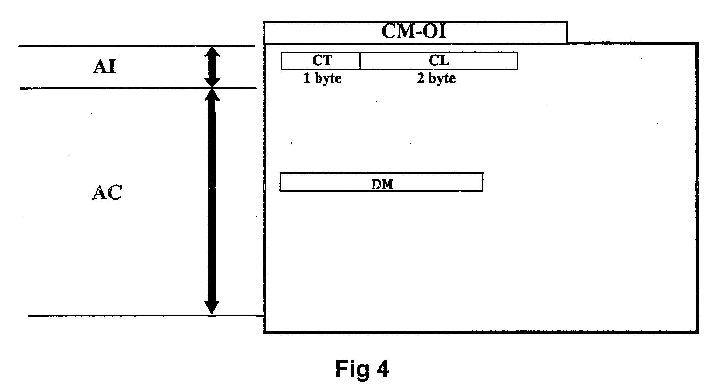

As illustrated in Fig. 4 in general a single control foresees a Header Area AI and a Control Area AC.

The Header Area AI is set up by at least two fields, for instance with reference to Fig. 4 by:
- a CT field set up by 1 byte indicating the type of control;
- a CL field set up by 2 bytes indicating the length of the control.

As explained later on there may be two additional fields for other types of controls.

Always with reference to Fig. 4 the Control Area AC is organized in sectors called "descriptors" of different types, according to the control, which will be described in details regarding the individual controls.

The controls may be of various types. Approximately the main controls may be subdivided in two groups or types of controls, managing the Interactive Television Activities or ATI and the TV Graphic Management as illustrated hereafter with more details.

ATI Management Controls which make it possible to communicate to the user set the data for a correct management of the interactive activity:
- Interactive Options;
- User Response Management;
- Score Synthesis;
- Prize and Lot Drawing Management.

TV Graphic Management Controls, which make it possible to describe in the best way the graphic by which the data are shown to the user:
- Clock Definition;
- Frame Definition;
- Score Table Definition;
- Special Character Definition;
- Graphic Options Definition;
- TV Icon Visualization Request;
- Score Table Visualization Request.

First of all, we will illustrate in details the TV Mask Descriptor used to define as a whole a Mask to be visualized on the user's screen.

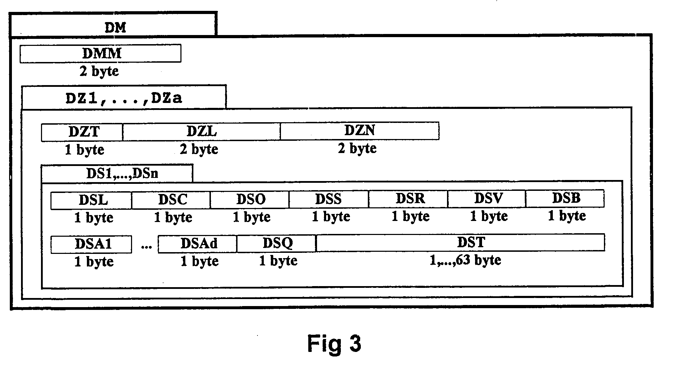

The TV Mask Descriptor indicated in Fig. 3 by DM comprises a series of data regarding the type of mask to be shown in overlap on the screen, such as for instance position, width, colour of the edge lines, etc. The TV mask descriptor comprises preferably a field DDM of 2 bytes for the visualization time out of the mask and a series of sections DZ1, ...DZa which describe the whole of strings to be visualized each one composed by a field DZT of one byte indicating the type of strings which will follow, a field DZL of 2 bytes which indicates the length of the section and a field DZN of 2 bytes which indicates the number of strings contained in the section, and the whole of the string sub-descriptors DS composed by the following fields:

| Initial | Type of information | Length (bytes) |
|---|---|---|
| DSL | Descriptor Length | 1 |
| DSC | Operational Code | 1 |
| DSO | Type of String | 1 |
| DSS | Number of Selection | 1 |
| DSR | Start of the Line | 1 |
| DSV | Start of Column | 1 |
| DSB | Nr. of bytes per attribute | 1 |
| DSA1...DSAd | Attributes | 1 each one |
| DSQ | Length of the String | 1 |
| DST | String heads | 1..63 |

The String Head DST is set up by a number of bytes which depends on the data of the string itself, but anyhow, not more than 63 bytes. If the string is longer, several strings following each other will be used.

With reference to the Code Descriptor Field DSC, this one indicates, if the strings are to be written, to be cancelled or to be used for the visualization of the user's name.

Referring to the String Type Field DOS, this indicates if the string has been numbered (i.e. related to a user's response) or not numbered (of normal text); the Selection Number Field DSS in the case of a numbered string allows to manage the numbering.

Referring to the Line Starting field DSR a the Column Starting field DSV, these indicate the line and the column of the mask on which the start of the string has to be positioned.

Referring to the Attribute fields DSA, these make it possible to specify the characteristics common to all characters of the string.

With reference to the type of section which contains the strings, characterized through the mentioned DZT field, this one may be for example "common", "band", "response", "Winner/ Loser" according to the control in which it is inserted as better pointed out hereafter with reference to the Fig. from 4 to 14.

Now the functions of the main controls will be illustrated in a more detailed way.

### Interactive Options

The control CM_OI, which general structure is illustrated by Fig. 4, is used to show on the screen the mask on which the user makes his choices by means of the remote control. In an extremely simplified form the mask may propose the choice between two or more alternative responses shown on the screen to be selected by moving the cursor on the screen.

Still with reference to Fig. 4 the control comprises in the Header area the fields CT and CL already taken into consideration, while the Control area provides for a Television Mask Descriptor DM of the type described in Fig. 3 containing one or more string descriptors of the "common" type.

### User's Response Management

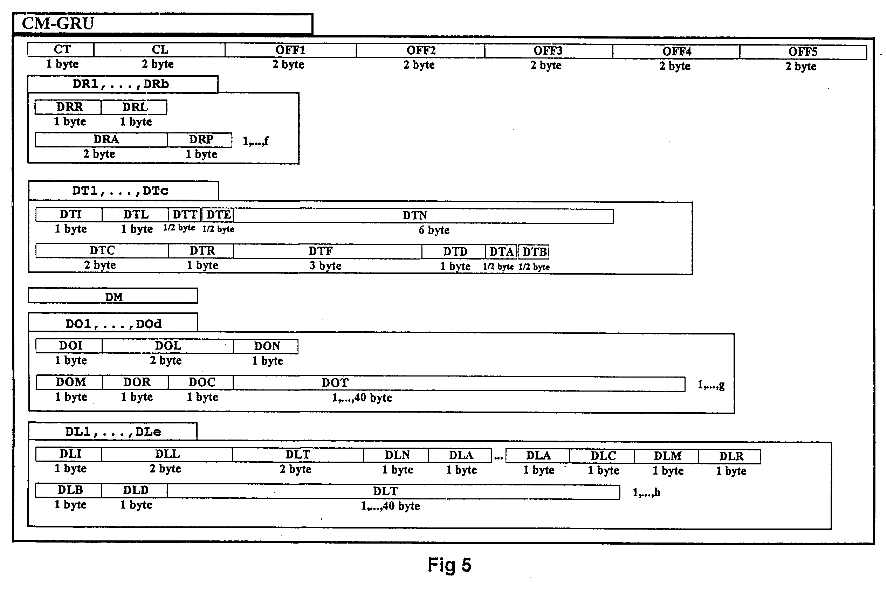

The control CM_GRU which structure is shown in Fig. 5 is used to define the user's response management rules, i.e. it indicates the operations the device has to carry out according to the Interactive Options control and to the response the user has given through the remote control.

With reference to the operations the user's device has to carry out, these may be a print, a scored total, a phone call, a memorialising of the response, etc.

The control comprises, like in the previous case a CL field indicating the type and length of the control, respectively, and other offset fields from OFF1 to OFF5 which are used as pointers for the relative descriptors.

Therefore the control foresees Response Management Descriptors DR1,...,DRb, Telephone Descriptors DT1,..., DTc, a TV Mask Descriptor indicated by DM, which is substantially identical with the one shown in Fig. 3 with a series sub-descriptors of strings of the "common" or the "response" type, Output Descriptors DO1, ..., DOd and Signalling Message Descriptors DL1, ..., DLe.

The Response Management Descriptor DR comprises a DRR field of 1 byte which indicates the response identification, i.e. the response the operations are linked to, a DRL field of 1 byte for the descriptor and section length (for instance f) each one set up by two fields to describe the operations to be carried out for this response; with reference to the two field allowing the description of the operation to be carried out, the first one includes two bytes identifies the type of operation (DRA) (print, phone call; scored total, etc.), and the second one of 1 byte indicates the Descriptor identification or the weight of the response (DRP).

Referring to the DRP field, this one indicates the identification of the Telephone or of the Output Descriptor to be connected to that operation or the weight of the response if the operation provides for an updating of the score.

The Telephone Descriptor DT makes it possible to define in a definite way the phone call the user's device has to make, and it comprises the following fields:

| Initials | Type of Information | Length (bytes) |
|---|---|---|
| DTI | Descriptor Identification | 1 |
| DTL | Descriptor Length | 1 |
| DTT | Type of Phone Call | 1/2 |
| DTE | Type of Payment | 1/2 |
| DTN | Digits of Phone Number | 6 |
| DTC | Cost of the Phone Call | 2 |
| DTR | Repetition Number | 1 |
| DTF | Repetition Frequency | 3 |
| DTD | Maximum Duration | 1 |
| DTA | Alternative Operation | 1/2 |
| DTB | Alternative Descriptor Identification | 1/2 |

With reference to Phone Call Type field DTT, this field indicates if the call refers to a Green Number, Audiotel, Itapac "easy way" etc; in case of a pay call the Type of Payment field DTE indicates if it will be made by credit card, smart card etc.

Regarding the Phone Cost DTC field, this one indicates the estimated cost of the call, and it is calculated on the basis of the Type of Phone Call DTT and of the phone number indicated in the field Digits of the Phone Number DTN.

Regarding the fields Number of Repetitions DTR and Frequency of Repetitions DTF, these allow to indicate how many times the set has to try to call and at what rate.

Referring to the Maximum Duration field DTD, this one indicates the maximum duration of the phone call, once this time is finished the system has to close the call, even if this one is still in progress, in order to avoid that due to communication errors the call continues to remain active.

Referring to the fields Alternative Activity DTA and Alternative Descriptor Identification DTB, these are used to identify an alternative action in the event the phone call remains without a successful conclusion.

The Output Descriptor DO is used to define a message to be printed, corresponding to a user's response, and it comprises a Field DOI of 1 byte indicating the identification of the descriptor, the field DOL of 2 bytes for the descriptor length, the field DON of 1 byte indicating the number of lines to be printed, and a series of sections (for instance g) for the description of the lines, each one set up by 1 byte indicating the length of the line DOM, 1 byte for the initial line DOR, 1 byte for the initial column DOC and the text of the line DOT containing a byte number which depends on the informations of the line itself, but anyhow not more than 40 bytes.

The Signalling Message Descriptor is used to activate on screen a standard message contained in the user's set which comprises a field DLI of 1 byte indicating the descriptor identification, the field DLL of 2 bytes for the descriptor length, the field of 2 bytes indicating the message visualization time out, the field DLN of 1 byte for the attribute number, a series of attributes DLA of 1 byte each for the character attribute description to be visualized, the field DLC of 1 byte indicating the initial column of the outline, the field DLM of 1 byte indicating the maximum line amplitude (preferably not more than 40 bytes), the field DLR of one byte indicating the number of lines to be visualized, a series of sections for the description of the lines (e.g. h) set up by 1 byte for the starting column DLB, 1 byte for the line length DLD (less than or equal to the value indicated in the mentioned DLM field) and the line text bytes DLT to be visualized.

### Score Synthesis

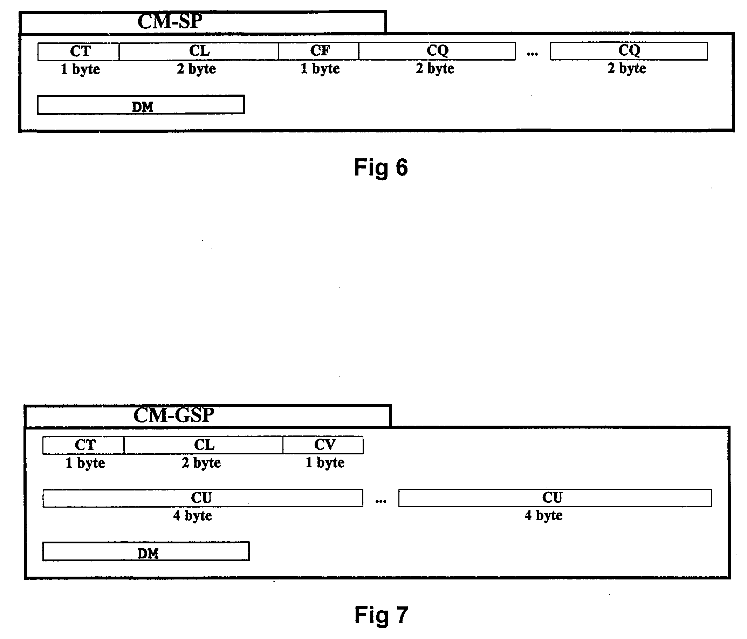

The control CM_SP which structure is shown by Fig. 6, is used to define the score rules for the user's response.

The control includes, like in the previous case, a field CT and a field CL which indicate the type and the length of the control, respectively, a field CF of 1 bite which indicates the number of present score bands, and a certain number of band fields CQ of 2 bytes each indicating the upper limit of the different score bands.

The control comprises moreover a TV mask descriptor indicated by DM which is substantially identical with the one shown in Fig. 3 with a series of string sub-descriptors of the "common" type or of the "band" type.

### Prize and Lot Drawing Management

The control CM_GSP, which structure is illustrated in Fig. 7, is used to transmit a courtesy message to users identified as winners.

The control includes, like in the previous case, a field CT and a field CL which indicates the type and the length of the control, respectively, a field CV of 1 byte which indicates the number of winners to whom the courtesy message has to be sent, and a certain number of fields CU (4 bytes), each one being the identification of one user.

The control comprises moreover a TV mask descriptor indicated by DM which is substantially identical with the one illustrated in Fig. 3 containing a series of string sub-descriptors of the "common" type or of the "Winner/Loser" type.

### Clock Definition

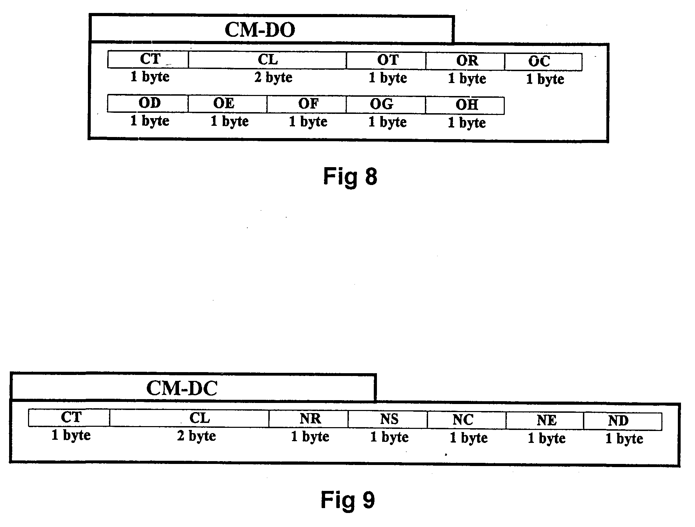

The control CM_DO, which structure is illustrated by fig. 8, is used to define the clock type the system has to point out for the user.

The control comprises, like in the previous cases, a field CT and a field CL which indicate the type and the length of the control, respectively, a field OT of 1 byte indicating the clock type by digits or by decreasing linear bars, the fields OR and OC of 1 byte each indicating the positioning line and column of the clock and the fields OD, OE, OF, OG, OH of 1 byte each, which indicate respectively the background colours of the bar of the linear minutes and seconds, and of the digital minutes and seconds.

### Frame Definition

The control CM_DC, which structure is illustrated by Fig. 9, is used to define the extremities of the frame which is shown to the user.

The control comprises, like in the previous cases, a field CT and a field CL which indicate the type and length of the control, the fields NR and NS of 1 byte each which indicate respectively the starting and final line of the frame, and a field ND of 1 byte which indicates the background colour.

### Score Table Definition

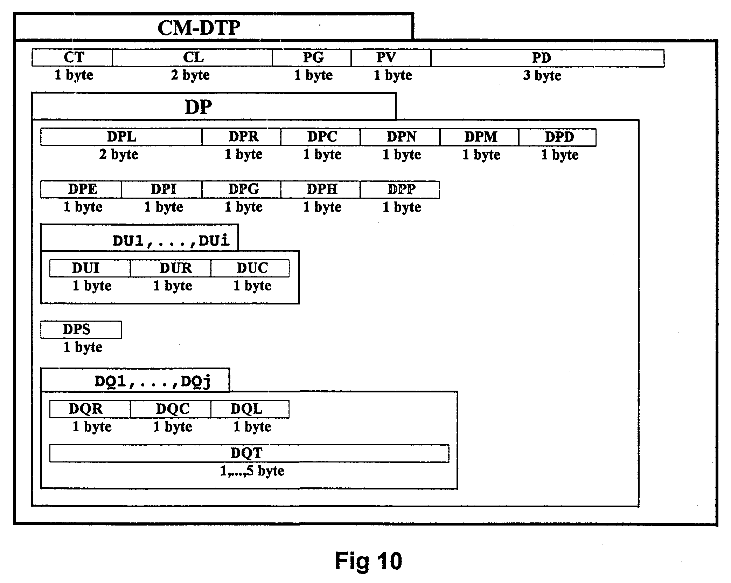

The control CM_DTP, which structure is illustrated in Fig. 10, is used to define the score table to be shown to the user.

The control comprises, like in the previous cases, a field CT and a field CL which indicate the type and the length of the control, respectively, a field PG of 1 byte which indicates the identification of the play or the programme to which it refers, a field PV of 1 byte which indicates the way of visualization which may be the one e.g. for the complete play, only together with the visualized masks, etc., a field PD of 3 bytes which indicates the score reset data and a Score Table descriptor DP set up by a field DPL of 2 bytes indicating the length of the descriptor, two fields of 1 byte each for the position of the line (DPR) and of the column (DPC) of the header, two fields of 1 byte each for the number of lines (DPN) and of columns (DPM) of the table, the field DPD of 1 byte for the number of digits, 4 fields of 1 byte each to define the colours of the external (DPE) and internal (DPI) background, the colour of the digits indicating the score (DPG) and the colour of the character referred to the frame (DPH), the field DPP of 1 byte which indicates the score number to be activated, a score descriptor DU for each score to be activated (e.g. i), the field DPS of 1 byte which indicates the number of strings and different graphic string descriptors DQ (for instance j).

Referring to the Score Descriptor DU, this one comprises 3 fields of 1 byte each which indicate respectively the Score identification (DUI), that is the score type which may be a Partial Score, Personal Record, Absolute Record etc., the number of lines (DUR) and the number of columns(DUC) into which the score itself has to be positioned.

Referring to the Graphic String Descriptor DQ, this one comprises 3 fields of 1 byte each which indicate the number of lines (DQR), the number of columns (DQC) into which the string and the string length (DQL) have to be placed, and by a field DQT of 5 bytes with the text of the string.

### Special Characters Definition

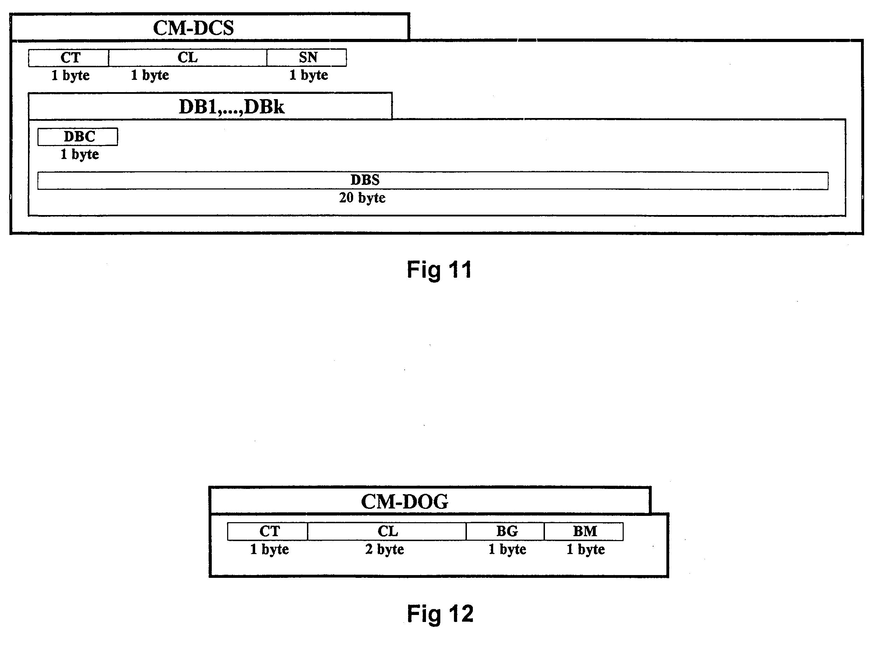

The control CM_DCS, which structure is illustrated in Fig. 11, is used to define special characters to be transmitted to the user.

The control comprises, like in the previous cases, a field CT and a field CL which indicate respectively, the type and the length of the control, the field SN of one byte which indicates the number of special characters which will follow, and a series of descriptors (e.g. k) of Special Characters DB set up by a field DBC of 1 byte indication of the character which will then be used to recall it for instance in a string of characters followed by a field DBS of 20 bytes which defines point by point the shape of the special character.

### Graphic Option Disabling

The control CM_DOG, which structure is illustrated in Fig. 12, is used to disable at whatever instant the visualization of the Graphic Options previously indicated, for example Clock Definition, Frame Definition and Score Table Definition.

The control comprises, like in the previous cases, a field CT and a field CL which indicates the type and length of the control, respectively, the fields BG an BM of 1 byte each which indicate respectively the options to be disabled and the disabling mode, i.e. if the disabling is only related to the following mask or if it is the definite one.

### TV Icon Visualization

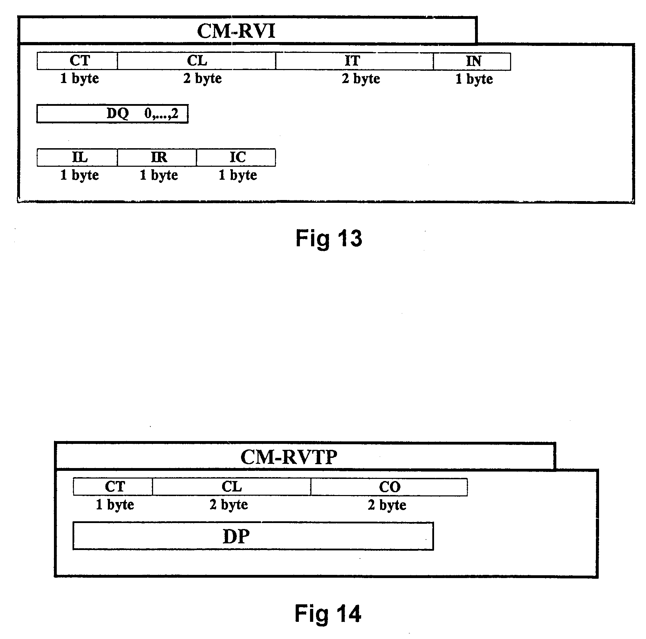

The control CM_RVI, which structure is illustrated in Fig. 13, is used for the control of the visualization of an icon on the user's screen.

The control comprises like in the previous cases a field CT and a field CL which indicate the type and length of the control, respectively, the fields IT an IN which indicate respectively the visualization time out (2 bytes) and the number of Icon definition strings (1 byte), i.e. the text strings accompanying the icon, the graphic string descriptors of the DQ type previously described (up to 2) and 3 further fields of 1 byte each comprising the Type of Icon IL, the positioning line IR and column IC.

### Score Table Visualization

The control CM_RVTP, which structure is illustrated in Fig. 14, is used for the control of the visualization of a Score Table on the user's screen.

The control comprises, like in the previous cases, a field CT and a field CL which indicate the type and length of the control, respectively, the field CO indicating the visualization time out (2 bytes) and the Score Table descriptor DP which is analogous to the one described by Fig. 10.

Thanks to the structure proposed for the messages, it turns out to be possible in the interactive television system of the invention to amplify at pleasure the number of Interactive Activities, defining new ones, which are different from the original ones, without being obliged to modify the decoder installed at the user's.

Moreover we realize a transmission of data exploiting in an optimum way the available resources regarding the TTX as well as the TV decoder. Even the TV decoder structure turns out to be simplified without prejudice for its operational capacity and the flexibility concerning future developments.

Finally the closing down of the Interactive Activities is always realized, and the transmission of messages to closed groups of users is possible.

While a particular embodiment of the present invention has been shown and described, it should be understood that the present invention is not limited thereto since other embodiments may be made by those skilled in the art without departing from the true spirit and scope thereof. It is thus contemplated that the present invention encompasses any and all such embodiments covered by the following claims.

## Claims

1. Interactive television system which foresees the transmission of interactive data (10) transmitted together with the television signal exploiting the unused lines of the television signal, and a decoder (14) connected to each user set (9) to process such interactivity data and to apply signals or visualizations retrieved from these to the user receiver (9),
characterized in that
said interactivity data (10) are set up by elementary data units or messages (M), each one consisting of a first header portion (H) and a second control portion (C), said control portion (C) containing data (CN) about the number of controls present in the message and at least an Interactive Option Control (ATI).

2. System according to claim 1, characterized in that said header portion (H) consists of four fields, a field (H1) which identifies the received channel, a field (H2) which identifies the current activity, a field (H3) which identifies the number of control sequences and a field (H4) which identifies the waiting time out of the following message.

3. System according to claim 1 or 2, characterized in that each Interactive Option control (CM_OI) is set up by a header area (AI) and by a control area (AC), the header area comprising a field (CT) corresponding to the type of control and a field (CL) indicating the length of the control, the control area comprising one or more sectors or descriptors (DM).

4. System according to claim 3, characterized in that the TV mask descriptor (DM) comprises:
a field (DMM) for the mask visualization time out; and
one or more sections (DZ) for the definition of the strings.

5. System according to claim 4, characterized in that each section (DZ) comprises a plurality of fields (DZT, DZL, DZN) repeated for each control and at least one string sub-descriptor.

6. System according to claim 5, characterized in that said plurality of fields repeated for each control comprise:
- a field (DZT) indicating the type of strings which follow;
- a field (DZL) indicating the length of the section;
- a field (DZN) indicating the number of strings contained in the section and string sub-descriptors (DS).

7. System according to the claims 4, 5 and 6, characterized in that each string sub-descriptor comprises a plurality of fields (DSL, DSC, DSO, DSS, DSR, DSV, DSB, DSA, DSQ) and a String Text field (DST) with a length which depends on the data of the string.

8. System according to claim 7, characterized in that said plurality of fields contained in the string sub-descriptor (DS) comprise:
- a field (DSL) which defines the length of the descriptor;
- a descriptor indication field (DSC), which defines if the string has to be written, cancelled or used for the visualization of the user's name;
- a field (DSO) indicating the string type, and in particular if the string is of the type which contains the indication of a telephone number to be dialled or which do not contain any indication;
- a field (DSS) which contains the real and true indication of the phone number to be dialled;
- a field (DSR) which defines the line of the mask on which the start of the string has to be positioned;
- a field (DSV) which defines the column of the mask on which the start of the string has to be placed;
- a field (DSB) which defines the number of bytes necessary to codify the string attributes;
- a plurality of fields (DSA1, ..., DSAd) which define the characteritics which are common to all characters of the string;
- a field (DSQ) which defines the number of bytes foreseen for the string text.

9. System according to claim 3, characterized in that the user's response management control (CM_GRU) includes said control header area (AI) and a plurality of offset fields (OFF1 - OFF5) which are used as pointers for the following descriptor groups:
- Response Management Descriptor (DGR);
- Telephone Descriptor (DT);
- TV Mask Descriptor (DM);
- Output Descriptor (DO).

10. System according to claim 9, characterized in that the user response management control (CM_GRU) comprises also Response Management Descriptors (DR) which include the following fields:
- a response indication field (DRR), i.e. the response the actions are linked to;
- a descriptor length field (DRL), i.e. the field indicating the number of bytes necessary for the complete transmission of the descriptor;
- at least one field (DRA) which indicates the action to be carried out in relation to the user's response;
- at least one field (DRP) which mentions the identification of the output descriptor or the "response weight" indicating a numerical value for each response to be used in the score calculation;

11. System according to claim 9, characterized in that the User Response Management control (CM_GRU) comprises also telephone descriptors (DT), i.e, descriptors suitable to define in a complete way the call the user set has to carry out, and it comprises the following fields:
- a descriptor identification field (DTI);
- a descriptor length identification field (DTL);
- a field (DTT) which identifies the type of transmission network the call is addressed to;
- a field (DTE) which identifies the type of payment;
- a field (DTC) which identifies the estimated cost of the call;
- a field (DTN) which identifies the phone number to be called;
- a field (DTR) which indicates the number of times by which the call has to be repeated;
- a field (DTF) which indicates the frequency of the repetitions;
- a field (DTD) which indicates the maximum duration of the call;
- fields (DTA-DTB) which indicate an alternative action in the case in which the call is not successful.

12. System according to claim 9, characterized in that the user response management control (CM_GRU) comprises also a TV mask descriptor (DM) with a series of sub-descriptors of strings of the "common" type and of the "response" type of the output descriptors (DO) by which it is possible to define a message to be printed in presence of a user response and signalling message descriptors (DL), i.e. descriptors suitable to activate on the screen one of the standard messages contained in the user's set.

13. System according to claim 12, characterized in that said output descriptor (DO) comprises:
- a field (DOI) which indicates the descriptor identification;
- a field (DOL) which indicates the length of the descriptor;
- a field (DON) which indicates the number of lines to be printed;
- a series of sections (DOM, DOR, DOC, DOT) which define the length of the line, the starting line, the starting column, and the text of the line.

14. System according to claim 12, characterized in that said signalling message descriptor (DL) comprises:
- a field (DLI) which indicates the identification of the descriptor;
- a field (DLL) which indicates the length of the descriptor;
- a field (DLT) which indicates the visualization timeout;
- a field (DLN) which indicates the number of attributes;
- a series of attributes (DLA) for the description of the attributes of the character to be visualized;
- a field (DLC) which indicates the starting column of the outline;
- a field (DLM) indicating the maximum line amplitude;
- a field (DLR) indicating the number of lines to be visualized;
- a series of sections for the description of the lines set up by a field (DLB) for the starting column, a field DLD for the length line and byte (DLT) of the line text to be visualized.

15. System according to claim 3, characterized in that score synthesis control (CM_SP) comprises said header area (AI) as well as the following fields:
- a field (CF) which indicates the number of present score bands;
- a certain number of band fields (CQ), each one indicating the upper limit of the different score bands, as well as a TV mask descriptor (DM) with a series of sub-descriptors.

16. System according to claim 3, characterized in that the Prize and Lot Drawing control (CM_GSP) comprises said header area (AI) as well as the following fields:
- a field (CV) which indicates the number of winners to whom a courtesy message has to be transmitted;
- a certain number of fields (CU), each one being an identification of a user;
- a TV mask descriptor (DM) with a series of sub-descriptors.

17. System according to claim 3, characterized in that the clock definition control (CM_DO) comprises said header area (AI) as well as the following fields:
- a field (OT) which indicates the clock type;
- fields (OR, OC) which indicate the positioning line and column of the clock;
- fields (OD, OE, OF, OG, OH) which indicate the graphic components of the single elements setting up the clock.

18. System according to claim 3, characterized in that the frame definition control (CM_DC) comprises said header field (AI) as well as the following fields:
- fields (NR, NS) which indicate the starting and ending line of the frame;
- fields (NC, NE) which indicate the starting and ending column of the frame;
- a field (ND) which indicates the colour of the background.

19. System according to claim 3, characterized in that the score table definition control (CM_DTP) comprises said header field (AI) as well as the following fields:
- a field (PG) which indicates the identification of the play or of the programme referred to;
- a field (PV) which indicates the visualization mode;
- a field (PD) which indicates the reset date of the scores;
- a score table descriptor (DP) set up by a plurality of fields which indicate the score number to be activated and the graphic characteristics by which said activation will be carried out;
- a score descriptor (DU) for each score to be activated;
- a field (DPS) which indicates the number of strings;
- a plurality of graphic string descriptors (DQ).

20. System according to claim 3, characterized in that the special character graphic definition control (CM_DCS) comprises said header field (AI) as well as the following fields:
- a field (SN) which indicates the number of special characters which will follow;
- at least a special character descriptor (DB) set up by a field (DBC) for the identification of the character which will then be used to recall it followed by a field (DBS) which defines the shape of the special character.

21. System according to claim 3, characterized in that the graphic option disabling control (CM_DOG) comprises said header field (AI) as well as the following fields:
- a field (BG) which indicates the options to be disabled;
- a field (BM) which indicates the disabling mode.

22. System according to claim 3, characterized in that the TV icon visualization request control (CM_RVI) comprises said header field (AI) as well as the following fields:
- a field (IT, IN) which indicate the visualization time out and the number of icon definition strings;
- graphic string descriptors (DQ);
- fields (IL, IR, IC) comprising the icon type as well as the positioning line and column.

23. System according to claim 3, characterized in that the score table visualization request control (CM_RVTP) comprises said header field (AI) as well as the following fields:
- a field (CO) which indicates the visualization timeout;
- a score table descriptor (DP).
